# EUROPEAN PATENT SPECIFICATION

(11) **EP 2 406 939 B1**
(45) Date of publication and mention of the grant of the patent: **11.06.2014**
(21) Application number: 09784549.9
(22) Date of filing: 13.03.2009
(51) Int. Cl.: H04M 1/02, G04G 17/08, G04G 21/04, H04B 1/38

(54) **MOBILE PHONE INCLUDING A SLIDING PORTION AND A FOLDING PORTION**
MOBILTELEFON MIT EINEM SCHIEBETEIL UND EINEM KLAPPTEIL
TÉLÉPHONE MOBILE COMPRENANT UNE PARTIE COULISSANTE ET UNE PARTIE PLIANTE

(43) Date of publication of application: 18.01.2012
(73) Proprietor: Kanhye, Yogesh Kumar, London SE18 1 HW (GB)
(72) Inventor: Kanhye, Yogesh Kumar, London SE18 1 HW (GB)
(74) Representative: Burt, Matthew Thomas
(86) International application number: PCT/GB2009/000700
(87) International publication number: WO 2010/103257

(56) References cited:
- WO-A1-2008/081657
- GB-A- 2 289 595
- GB-A- 2 413 915
- US-A1- 2005 052 837
- US-A1- 2009 069 045

## Description

This invention relates to mobile phones.

It is generally desirable to provide mobile phones of a small size. However, a conflicting desire is that a mobile phone have as much functionality as possible, both in the number of functions available to a user of the mobile phone, and the ease of use of the mobile phone for the user.

GB 2413915 A (Kanhye, Yohesh Kumar) published 9 November 2005 discloses a mobile telephone with a body portion mounted on a wrist strap. The body portion has a first set of keys. A first screen associated with the first set of keys is hingably mounted on the body portion. A second set of keys is provided on the opposite side of the first screen, and a second screen associated with the second set of keys is hingably mounted on the first screen. A watch is provided on the opposite side of the second screen.

GB2289595 A (NEC Corporation) published 22 November 1995 discloses a mobile telephone with a first housing, and a second housing slidably mounted on the first housing. A set of keys is provided on the second surface. The second housing slides to reveal a screen mounted in the first housing.

It would be desirable to provide a mobile phone of a small size, but which also has a high degree of functionality which can be easily accessed by a user.

In accordance with the present invention there is provided a mobile phone arranged to be worn on the wrist comprising:
a wrist strap;
a body portion mounted on the wrist strap comprising a first set of keys;
a slide portion slidably mounted to the body portion, the slide portion comprising a second set of keys, wherein the slide portion is moveable relative to the body portion between a first position in which it overlies the first set of keys and a second position in which the first set of keys are uncovered; and
a flip portion pivotally mounted to the body portion, the flip portion comprising a screen, wherein the flip portion is moveable relative to the body portion between a closed position in which it overlies the slide portion and an open position in which the slide portion is uncovered;
the flip portion further comprising a watch provided on the opposite face of the flip portion from the screen.

The provision of both a slide portion and a flip portion allows the mobile phone to be arranged in such a way that it is of a small size when the slide portion is in the first, stowed, position and the flip portion is in the closed position, while the functions of the phone can be easily accessed using the first and second sets of keys and screen when the slide portion is in the second, open, position and the flip portion is in the opened position.

Preferably, the first set of keys and the second set of keys are associated with the screen and operative in relation to information displayed on the screen.

Preferably, the body portion comprises at least one rail and the slide portion comprises at least one corresponding rail slot for accommodating said rail. Alternatively, the slide portion comprises at least one rail and the body portion comprises at least one corresponding rail slot for accommodating said rail. In both cases, preferably the at least one rail comprises a lip portion extending transversely from the rail axis, the lip portion being arranged to secure the rail in the rail slot and to prevent the slide portion being lifted from the body portion. Advantageously, the at least one rail comprises a stop element arranged to prevent the slide portion being slidably detached from the body portion. Advantageously, the slide portion has an aperture therethrough to allow wires to pass between the body portion and the slide portion. Advantageously, the slide portion aperture is formed in the stop element.

The body portion of the mobile phone may be of substantially square cross section when seen in plan.

Preferably, the first set of keys comprises alphanumeric keys. Preferably, the second set of keys comprises keys for accepting and rejecting calls. Advantageously, the flip portion comprises keys for accepting and rejecting calls that are accessible when the flip portion is in the closed position. This allows calls to be accepted or rejected quickly and easily, as the flip portion does not need to be opened nor the slide portion moved to second position.

An embodiment of the invention will now be described, by way of example only, with reference to the accompanying drawings, in which:
Figure 1 is a plan view of a mobile phone according to the present invention, with a flip top in a closed position and a slider in a stowed position, a wrist strap of the mobile phone being partially omitted for clarity of illustration;
Figure 2 is a right side view of the mobile phone in the closed and stowed position, a wrist strap of the mobile phone being partially omitted for clarity of illustration;
Figure 3 is a diagrammatic perspective view of the mobile phone, with the flip top in an open position and the slider in a deployed position;
Figure 4 is an exploded right side view of the mobile phone, with the flip top in a partially open position, the slider of the mobile phone being shown exploded from the other parts of the mobile phone, the wrist strap being omitted for clarity of illustration;
Figure 5 is an underside view of the slider;
Figure 6 is a front view of the slider; and
Figure 7 is a diagrammatic perspective view of the mobile phone in the open position, the slider of the mobile phone being omitted for clarity of illustration.

Referring to the accompanying drawings, a mobile phone 10 is shown embodying the present invention.

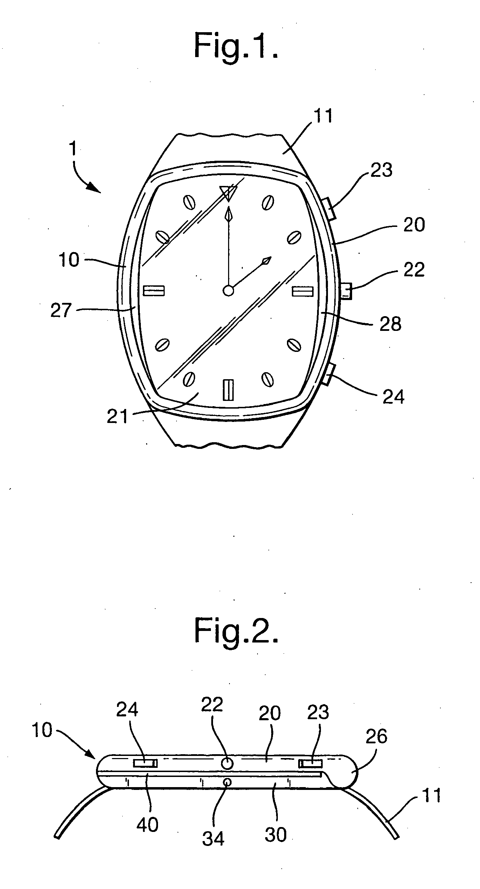

As shown in Figure 1, the mobile phone 1 is arranged to be worn on the wrist, and includes a main portion 10 mounted on a wrist strap 11.

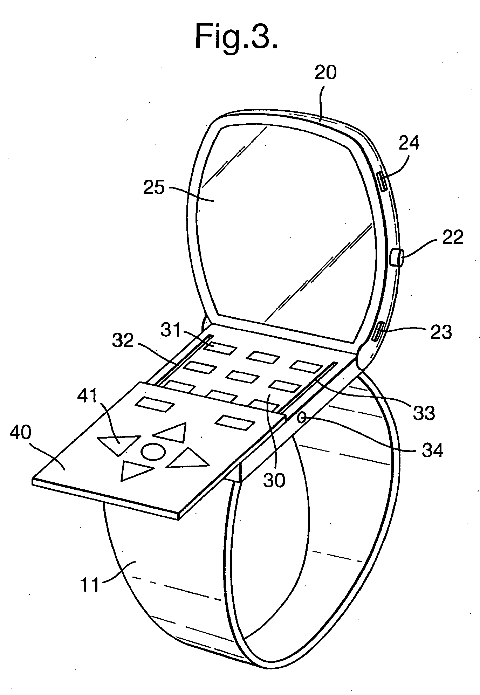

As can be seen in Figures 2 and 3, the main portion 10 has a base 30, a slider 40 and a flip top 20. The base 30 is mounted on its underside to the wrist strap 11. The flip top 20 is pivotally mounted to the upper side of the base 30 by a hinge 26. The slider 40 is slidably mounted to the upper side of the base 30.

The slider 40 can move from its stowed position, where it lies directly above the base 30, as shown in Figure 2, to its deployed position, where it is pulled out away from the base 30, as shown in Figure 3. The flip top 20 can move from its closed position, where the flip top 20 lies flat against the slider 40, as shown in Figure 2, to its open position, where the flip top 20 is at an angle of approximately 100 degrees to the base 30 and slider 40, as shown in Figure 3. When the flip top 20 is in its closed position and the slider 40 is in its stowed position, the base 30, the flip top 20 and the slider 40 are approximately congruent in plan, as can be seen in Figures 1 and 2.

As can be seen in Figure 1, a watch is mounted to the uppermost side of the flip top 20 so that watch face 21 can be seen when the flip top 20 is in its closed position. A watch crown 22 is mounted at the centre of the right hand side of the flip top 20 and can adjust the time of the watch in a conventional manner. The watch has its own power source (not shown).

Also mounted on the right hand side of the flip top are two buttons: a call accept button 23 and a call reject button 24. As can be seen in Figure 1, the call accept button 23 is mounted above the watch crown 22 when the flip top 20 is closed and the call reject button 24 is mounted below the watch crown 22 when the flip top 20 is closed. It will be appreciated that when the flip top 20 is opened, the call accept button 23 will be below the watch crown 22 and the call reject button 24 will be above the watch crown 22, as shown in Figures 3, 4 and 7.

A pair of speakers 27, 28 are mounted on the upper side of the flip top 20 on either side of the watch face 21. These speakers 27, 28 provide the output for sound of the mobile phone.

As can be seen in Figure 3, a screen 25 is mounted to the underside of the flip top 20 such that when the flip top 20 is in its open position the screen 25 can be seen by a user.

On the upper surface of the slider 40 is mounted a set of keys 41. The set of keys 41 is associated with the screen 25 and operative in relation to information displayed on the screen 25. The set of keys 41 contains keys for use in navigation and selection of the features of the mobile phone 1. The set of keys 41 is accessible when the flip top 20 is in the open position.

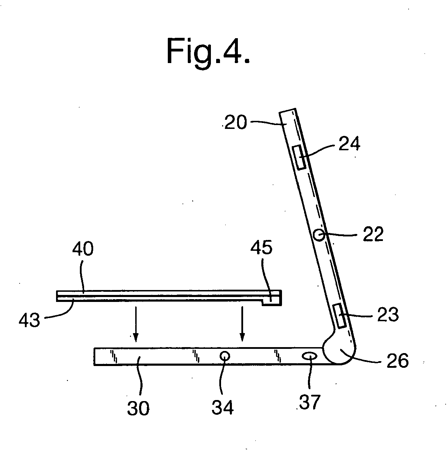

As can be seen in Figures 4, 5 and 6, the slider 40 has two rails 42, 43 running down the length of its underside; one rail 42 runs down the left side and one rail 43 runs down the right side. Each rail has a stop element 44, 45 located towards a far end of the rail. The stop elements 44, 45 extend further away from the underside of the slider 40 than the rails themselves. Each rail 42, 43 also has a lip 48, 49 running along the length of the rail. The lips extend outwards from the rail and are located about half way down the rail depth.

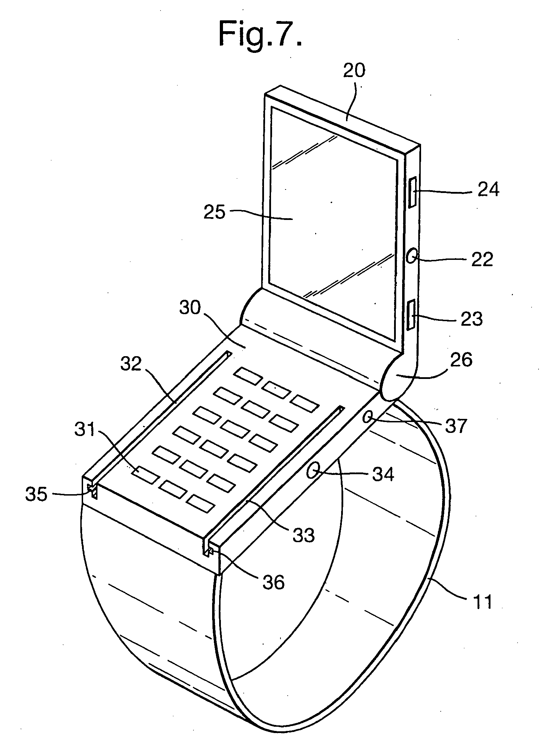

The rails 42, 43 are housed in corresponding rail slots 32, 33 in the base 30. Hence, the two rail slots 32, 33 are located at the left and right hand sides of the base, with the distance between them being the same as the distance between the rails 42, 43 on the slider 40. The rail slots 32, 33 can be seen most clearly in Figure 7.

The rail slots 32, 33 have a depth corresponding to the depth of the stop elements 44, 45 of the rails 42, 43. The rail slots 32, 33 extend along substantially the whole length of the base 30. However, the rail slots 32, 33 are only the depth of the rails 42, 43 (i.e. not the depth of the stop elements 44, 45) at a front portion of the rail slots 32, 33. This ensures that the rails can slide in and out of the rails slots but that the slider 40 cannot be completely separated from the base 30 as the stop elements 44, 45 are contained within the rail slots 32, 33.

The rail slots also have lip slots 35, 36 for accommodating the lips 48, 49. These ensure that the rails 42, 43 cannot be lifted from the rail slots 32, 33.

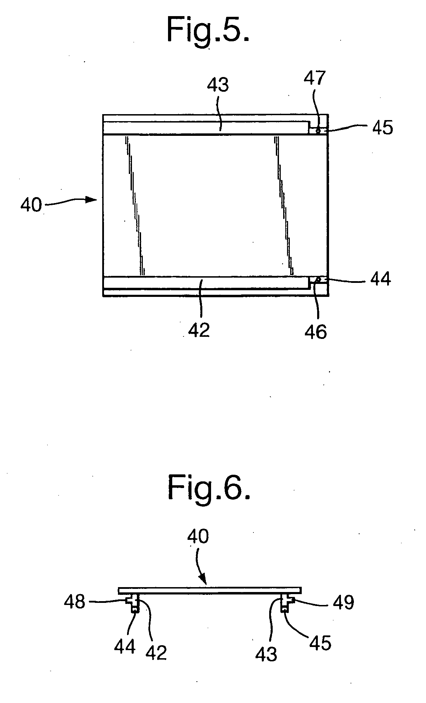

As can be seen in Figure 5, each stop element 44, 45 has an aperture 46, 47 through the depth of the stop element. This allows wires (not shown) to be passed through the stop elements to electrically linking the slider 40 and the base 30.

As can be seen in Figure 3, when the slider 40 is in its deployed position the upper side of the base 30 underneath is exposed. On the upper side of the base 30 is mounted a further set of keys 31. The set of keys 31 is also associated with the screen 25 and operative in relation to information displayed on the screen 25. The set of keys 31 comprises alphanumeric keys for use when composing text messages, for example.

The base 30 also has a battery charger socket 34 located in the centre of the right hand side of the base 30. This socket 34 can accommodate a battery charger to re-charge a battery (not shown) of the mobile phone 1.

As can be seen in Figures 4 and 7, a slider release button 37 is mounted on the right hand side of the base 30. The slider release button 37 is mounted above the battery charger socket 34. Upon activation of the slider release button 37, the slider 40 is deployed. This can be achieved by a spring and latch combination (not shown), or similar.

The mobile phone 1 includes a tracking device (not shown), linked to a home/office global positioning system (GPS). This would allow, for example, parents to monitor the movements of their children, or police to monitor the movements of criminals. The mobile phone 1 also includes an activatable alarm (not shown). For example, the alarm may be a siren activated by pulling a pin from the mobile phone. The siren can be used to deter thieves or muggers.

Alternatively, or additionally, to the alarm emitting a noise when activated, the mobile phone 1 may send a signal to a third party, for example the police, upon activation of the alarm. The third party will then be able to track the mobile phone 1 (and the location of the user) using the tracking device.

The mobile phone 1 may additionally include a GPS navigation system which can be used in conjunction with maps (for example street maps) displayed on the screen 25, for example to allow a user of the mobile phone 1 to obtain directions from their present location to a desired destination. The GPS system may be the same as that described above, or may be a separate GPS system. The maps may be stored in memory on the mobile phone 1, or downloaded as required, for example from the internet via the connection to the mobile phone network.

## Claims

1. A mobile phone (1) arranged to be worn on the wrist comprising:
a wrist strap (11);
a body portion (30) mounted on the wrist strap (11) comprising a first set of keys (31);
a slide portion (40) slidably mounted to the body portion (30), the slide portion (40) comprising a second set of keys (41), wherein the slide portion (40) is moveable relative to the body portion (30) between a first position in which it overlies the first set of keys (31) and a second position in which the first set of keys (31) are uncovered; and
a flip portion (20) pivotally mounted to the body portion (30), the flip portion (20) comprising a screen (25), wherein the flip portion (20) is moveable relative to the body portion (30) between a closed position in which it overlies the slide portion (40) and an open position in which the slide portion (40) is uncovered;
the flip portion (20) further comprising a watch (21) provided on the opposite face of the flip portion (20) from the screen (25).

2. A mobile phone (1) as claimed in claim 1, wherein the first set of keys (31) and the second set of keys (41) are associated with the screen (25) and operative in relation to information displayed on the screen (25).

3. A mobile phone (1) as claimed in claim 1 or 2, wherein the body portion (30) comprises at least one rail and the slide portion (40) comprises at least one corresponding rail slot for accommodating said rail.

4. A mobile phone (1) as claimed in claim 1 or 2, wherein the slide portion (40) comprises at least one rail (42; 43) and the body portion (30) comprises at least one corresponding rail slot (32; 33) for accommodating said rail (42; 43).

5. A mobile phone (1) as claimed in claim 3 or 4, wherein the at least one rail (42; 43) comprises a lip portion (48; 49) extending transversely from the rail axis, the lip portion (48; 49) being arranged to secure the rail (42; 43) in the rail slot (32; 33) and to prevent the slide portion (40) being lifted from the body portion (30).

6. A mobile phone (1) as claimed in any of claims 3 to 5, wherein the at least one rail (42; 43) comprises a stop element (44; 45) arranged to prevent the slide portion (40) being slidably detached from the body portion (30).

7. A mobile phone (1) as claimed in any preceding claim, wherein the slide portion (40) has an aperture therethrough to allow wires to pass between the body portion (30) and the slide portion (40).

8. A mobile phone (1) as claimed in claim 7 when dependent on claim 6, wherein the slide portion aperture is formed in the stop element (44; 45).

9. A mobile phone (1) as claimed in any preceding claim, wherein the body portion (30) of the mobile phone is of substantially square cross section when seen in plan.

10. A mobile phone (1) as claimed in any preceding claim, wherein the first set of keys (31) comprises alphanumeric keys.

11. A mobile phone (1) as claimed in any preceding claim, wherein the second set of keys (41) comprises keys for accepting and rejecting calls.

12. A mobile phone (1) as claimed in any preceding claim, wherein the flip portion (20) comprises keys for accepting and rejecting calls that are accessible when the flip portion (20) is in the closed position.

## Patentansprüche

1. Mobiltelefon (1), das zum Tragen am Handgelenk ausgebildet ist, aufweisend:
ein Armband (11);
einen an dem Armband (11) angebrachten Körperteil (30) mit einem ersten Satz von Tasten (31);
einen Schiebeteil (40), der an dem Körperteil (30) verschiebbar angebracht ist, wobei der Schiebeteil (40) einen zweiten Satz von Tasten (41) aufweist, wobei der Schiebeteil (40) relativ zu dem Körperteil (30) zwischen einer ersten Position, in der er dem ersten Satz von Tasten (31) überlagert ist, und einer zweiten Position, in der der erste Satz von Tasten (31) freiliegt, bewegbar ist; und
einen Klappteil (20), der an dem Körperteil (30) schwenkbar angebracht ist, wobei der Klappteil (20) einen Bildschirm (25) aufweist, wobei der Klappteil (20) relativ zu dem Körperteil (30) zwischen einer geschlossenen Position, in der er dem Schiebeteil (40) überlagert ist, und einer offenen Position, in der der Schiebeteil (40) freiliegt, bewegbar ist;
wobei der Klappteil (20) ferner eine Uhr (21) aufweist, die auf der dem Bildschirm (25) entgegengesetzten Seite des Klappteils (20) vorgesehen ist.

2. Mobiltelefon (1) nach Anspruch 1,
wobei der erste Satz von Tasten (31) und der zweite Satz von Tasten (41) dem Bildschirm (25) zugeordnet sind und in Bezug auf auf dem Bildschirm (25) angezeigter Information betätigbar sind.

3. Mobiltelefon (1) nach Anspruch 1 oder 2,
wobei der Körperteil (30) zumindest eine Schiene aufweist und der Schiebeteil (40) mindestens einen entsprechenden Schienenschlitz zum Aufnehmen der Schiene aufweist.

4. Mobiltelefon (1) nach Anspruch 1 oder 2,
wobei der Schiebeteil (40) mindestens eine Schiene (42; 43) aufweist und der Körperteil (30) mindestens einen entsprechenden Schienenschlitz (32; 33) zum Aufnehmen der Schiene (42; 43) aufweist.

5. Mobiltelefon (1) nach Anspruch 3 oder 4,
wobei die mindestens eine Schiene (42; 43) einen Lippenbereich (48; 49) aufweist, der sich quer von der Schienenachse weg erstreckt, wobei der Lippenbereich (48; 49) dazu ausgebildet ist, die Schiene (42; 43) in dem Schienenschlitz (32; 33) zu sichern und zu verhindern, dass der Schiebeteil (40) von dem Körperteil (30) abgehoben wird.

6. Mobiltelefon (1) nach einem der Ansprüche 3 bis 5,
wobei die mindestens eine Schiene (42, 43) ein Anschlagelement (44; 45) aufweist, das dazu ausgebildet ist, ein durch Verschieben erfolgendes Lösen des Schiebeteils (40) von dem Körperteil (30) zu verhindern.

7. Mobiltelefon (1) nach einem der vorhergehenden Ansprüche,
wobei der Schiebeteil (40) eine sich durch diesen hindurch erstreckende Öffnung aufweist, um die Passage von Drähten zwischen dem Körperteil (30) und dem Schiebeteil (40) zu ermöglichen.

8. Mobiltelefon (1) nach Anspruch 7 bei Abhängigkeit von Anspruch 6,
wobei die Schiebeteilöffnung in dem Anschlagelement (44; 45) ausgebildet ist.

9. Mobiltelefon (1) nach einem der vorhergehenden Ansprüche,
wobei der Körperteil (30) des Mobiltelefons einen im Wesentlichen quadratischen Querschnitt in der Draufsicht aufweist.

10. Mobiltelefon (1) nach einem der vorhergehenden Ansprüche,
wobei der erste Satz von Tasten (31) alphanumerische Tasten aufweist.

11. Mobiltelefon (1) nach einem der vorhergehenden Ansprüche,
wobei der zweite Satz von Tasten (41) Tasten zum Annehmen und Abweisen von Anrufen aufweist.

12. Mobiltelefon (1) nach einem der vorhergehenden Ansprüche,
wobei der Klappteil (20) Tasten zum Annehmen und Abweisen von Anrufen aufweist, auf die Zugriff genommen werden kann, wenn sich der Klappteil (20) in der geschlossenen Position befindet.

## Revendications

1. Téléphone mobile (1) agencé pour être porté au poignet, comprenant :
un bracelet (11) ;
une partie de corps (30) montée sur le bracelet (11) comprenant un premier ensemble de touches (31) ;
une partie coulissante (40) montée de façon coulissante sur la partie de corps (30), la partie coulissante (40) comprenant un second ensemble de touches (41), dans lequel la partie coulissante (40) est mobile par rapport à la partie de corps (30) entre une première position dans laquelle elle recouvre le premier ensemble de touches (31) et une seconde position dans laquelle le premier ensemble de touches (31) est découvert ; et
une partie de rabat (20) montée en pivot sur la partie de corps (30), la partie du rabat (20) comprenant un écran (25), dans lequel la partie de rabat (20) est mobile par rapport à la partie de corps (30) entre une position fermée dans laquelle elle recouvre la partie coulissante (40) et une position ouverte dans laquelle la partie coulissante (40) est découverte ;
la partie de rabat (20) comprenant en outre une montre (21) disposée sur la face opposée de la partie de rabat (20) par rapport à l'écran (25).

2. Téléphone mobile (1) selon la revendication 1, dans lequel le premier ensemble de touches (31) et le second ensemble de touches (41) sont associés à l'écran (25) et opérationnels par rapport aux informations affichées sur l'écran (25).

3. Téléphone mobile (1) selon la revendication 1 ou 2, dans lequel la partie de corps (30) comprend au moins un rail et la partie coulissante (40) comprend au moins une fente de rail correspondante destinée à recevoir ledit rail.

4. Téléphone mobile (1) selon la revendication 1 ou 2, dans lequel la partie coulissante (40) comprend au moins un rail (42 ; 43) et la partie de corps (30) comprend au moins une fente de rail (32 ; 33) correspondante destinée à recevoir ledit rail (42 ; 43).

5. Téléphone mobile (1) selon la revendication 3 ou 4, dans lequel le au moins un rail (42 ; 43) comprend une partie de lèvre (48 ; 49) s'étendant transversalement à partir de l'axe du rail, la partie de lèvre (48 ; 49) étant agencée pour fixer le rail (42 ; 43) dans la fente de rail (32 ; 33) et pour empêcher la partie coulissante (40) d'être soulevée de la partie de corps (30).

6. Téléphone mobile (1) selon l'une quelconque des revendications 3 à 5, dans lequel le au moins un rail (42 ; 43) comprend un élément de butée (44 ; 45) agencé pour empêcher la partie coulissante (40) d'être détachée en coulissement de la partie de corps (30).

7. Téléphone mobile (1) selon l'une quelconque des revendications précédentes, dans lequel la partie coulissante (40) comporte une ouverture la traversant pour permettre le passage de fils entre la partie de corps (30) et la partie coulissante (40).

8. Téléphone mobile (1) selon la revendication 7 lorsqu'elle dépend de la revendication 6, dans lequel l'ouverture de partie coulissante est formée dans l'élément de butée (44 ; 45).

9. Téléphone mobile (1) selon l'une quelconque des revendications précédentes, dans lequel la partie de corps (30) du téléphone mobile a une section sensiblement carrée en vue en plan.

10. Téléphone mobile (1) selon l'une quelconque des revendications précédentes, dans lequel le premier ensemble de touches (31) comprend des touches alphanumériques.

11. Téléphone mobile (1) selon l'une quelconque des revendications précédentes, dans lequel second ensemble de touches (41) comprend des touches permettant d'accepter ou de rejeter des appels.

12. Téléphone mobile (1) selon l'une quelconque des revendications précédentes, dans lequel la partie de rabat (20) comprend des touches destinées à accepter et rejeter des appels qui sont accessibles lorsque la partie de rabat (20) est en position fermée.
